# DEMANDE DE BREVET EUROPEEN

(11) **EP 0 702 358 A1**
(43) Date de publication de la demande: **20.03.1996**
(21) Numéro de dépôt: 95402048.3
(22) Date de dépôt: 11.09.1995
(51) Int. Cl.: G11B 5/39

(54) **Tête magnétique à magnétorésistance multicouche longitudinale sous-jacente**

(30) Priorité: 13.09.1994 FR 9410897
(71) Demandeur: COMMISSARIAT A L'ENERGIE ATOMIQUE, F-75015 Paris (FR); SILMAG S.A., F-38054 Grenoble Cédex 9 (FR)
(72) Inventeur: Lazzari, Jean-Pierre, F-38700 Corenc (FR)
(74) Mandataire: Dubois-Chabert, Guy

(57) **Abrégé**

La tête de l'invention comprend une couche magnétique (16) qui épouse la forme d'un relief isolant (14) et une magnétorésistance (MR) multicouche fonctionnant en mode longitudinal et qui est sous-jacente à la couche magnétique.

Application à l'enregistrement magnétique.

## Description

### Domaine technique

La présente invention a pour objet une tête magnétique à magnétorésistance multicouche longitudinale sous-jacente. Elle trouve une application dans l'enregistrement magnétique. La tête de l'invention peut être à lecture seule et constituer un capteur, ou être à lecture et à écriture.

### Etat de la technique

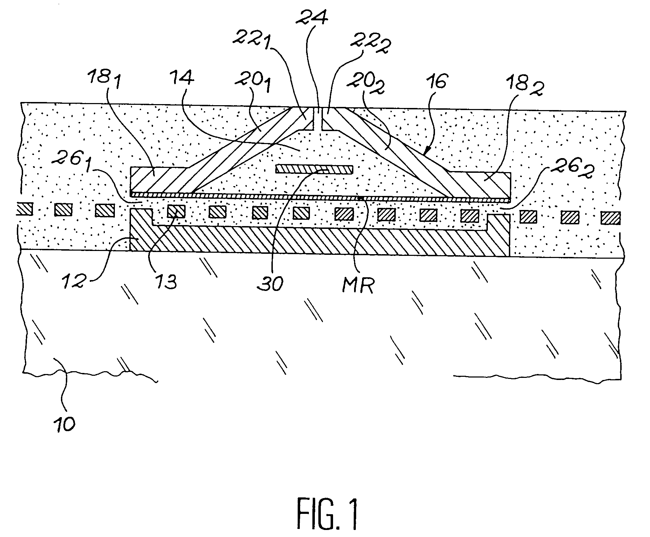

L'invention s'applique essentiellement aux têtes dites horizontales à couches minces. Une telle tête est représentée sur la figure 1 annexée. On y voit, en coupe, un substrat semiconducteur 10, une pièce polaire inférieure 12 avec un enroulement conducteur 13, généralement doublement spiralé. Sur la partie supérieure de la tête se trouve un relief isolant 14 ("ridge"). Ce relief représente un sommet plat et deux flancs inclinés. Il est surmonté par une couche magnétique supérieure 16. Cette couche épouse la forme du relief et présente donc deux parties latérales horizontales 18₁, 18₂, deux parties intermédiaires inclinées 20₁ et 20₂ correspondant aux flancs du relief et deux parties centrales horizontales 22₁, 22₂ recouvrant le sommet du relief et formant les pièces polaires de la tête. Ces pièces polaires sont séparées par un entrefer 24.

La tête comprend encore un élément magnétorésistant MR allant d'une extrémité 18₁ à l'autre 18₂ de la couche magnétique supérieure 16. Cet élément est au contact avec la couche magnétique 16 et forme avec celle-ci un circuit magnétique fermé.

Un élément conducteur 30 parcouru par un courant dans une direction perpendiculaire au plan de la figure sert de moyen de polarisation.

Le circuit magnétique d'écriture formé par la couche supérieure 16 et par la couche inférieure 12 est interrompu par deux intervalles auxiliaires 26₁, 26₂ ménagés entre les deux couches magnétiques 12, 16. Dans d'autres variantes, ces intervalles auxiliaires sont situés ailleurs et il peut n'y en avoir qu'un seul. Ces intervalles ont pour but d'augmenter la réluctance du circuit d'écriture et de favoriser le circuit de lecture comprenant la magnétorésistance.

Une telle tête est décrite dans le document EP-A-0 475 397.

Bien que donnant satisfaction à certains égards, ce type de tête présente un inconvénient lié à la faiblesse du signal de mesure. Le flux magnétique de lecture se divise, en effet, entre un premier circuit constitué par la couche magnétique supérieure 16 et la magnétorésistance MR et un second circuit constitué par la couche magnétique supérieure et la couche magnétique inférieure, de sorte que la proportion du flux traversant la magnétorésistance reste faible en dépit de l'interruption du second circuit magnétique.

La présente invention a justement pour but de remédier à cet inconvénient.

### Exposé de l'invention

La présente invention propose une tête magnétique pour laquelle le flux de lecture est mieux couplé à la magnétorésistance et la sensibilité de la magnétorésistance améliorée. Ce but est atteint essentiellement par trois dispositions combinées :
- la magnétorésistance est d'un type particulier, à savoir du type multicouche (et non plus monolithique),
- la magnétorésistance fonctionne en mode longitudinal (et non plus tranversal),
- enfin, la magnétorésistance épouse la forme de la couche magnétique supérieure et n'est plus horizontale. C'est en ce sens qu'on peut parler de magnétorésistance sous-jacente.

A propos de la première caractéristique de l'invention, on sait que les matériaux magnétorésistants multicouches sont constitués d'un empilement de couches magnétiques séparées par des couches métalliques non magnétiques.

Les structures multicouches utilisent le cobalt, le fer, le cuivre, le chrome, le nickel, les alliages de fer et de nickel, l'argent, l'or, le molybdène, le ruthénium et le manganèse, comme décrit dans l'article de H. YAMAMOTO et T. SHINJO, publié dans la revue "IEEE Translation Journal of Magnetics in Japan", vol. 7, n°9, septembre 1992, sous le titre "Magnetoresistance of Multilayers", p. 674-684).

A propos de la seconde caractéristique de l'invention, il faut observer qu'un élément magnétorésistant peut fonctionner en mode longitudinal si le courant de mesure qui le traverse et le champ magnétique qu'il détecte sont colinéaires et dirigés dans le sens de la longueur de l'élément. C'est le cas dans l'invention.

Une magnétorésistance multicouche utilisée en mode longitudinal est soit "à valve de spins", soit à couplage antiferromagnétique (c'est-à-dire qu'en champ nul les couches magnétiques présentent alternativement une aimantation opposée) . L'invention s'applique plus particulièrement à ce dernier type de magnétorésistance..

Quant au caractère sous-jacent de la magnétorésistance qui définit la troisième caractéristique de l'invention, il améliore le couplage avec le flux magnétique de lecture. Ce flux, engendré au niveau de l'entrefer, est obligé, d'une manière ou d'une autre, de traverser la magnétorésistance.

De façon précise, la présente invention a donc pour objet une tête magnétique comprenant une couche magnétique recouvrant un relief isolant avec un sommet plat et deux flancs inclinés, cette couche magnétique comprenant, sur le sommet du relief, deux pièces polaires séparées par un entrefer amagnétique, la tête comprenant encore un élément magnétorésistant allant d'une extrémité de la couche magnétique à l'autre, cette tête étant caractérisée par le fait que l'élément magnétorésistant est une magnétorésistance multicouche travaillant en mode longitudinal, cette magnétorésistance s'étendant sous toute la longueur de la couche magnétique en épousant la forme de cette couche et étant séparée de celle-ci par une mince couche isolante.

### Brève description des dessins

- la figure 1, déjà décrite, représente, en coupe, une tête magnétique selon l'art antérieur,
- la figure 2 représente une tête magnétique de lecture conforme à l'invention,
- la figure 3 représente une tête magnétique de lecture et d'écriture selon l'invention,
- la figure 4 montre, en vue de dessus, les concentrateurs de flux,
- les figures 5A, 5B, 5C, 5D illustrent quatre étapes d'un procédé de réalisation d'une tête selon l'invention.

### Exposé détaillé de modes de réalisation

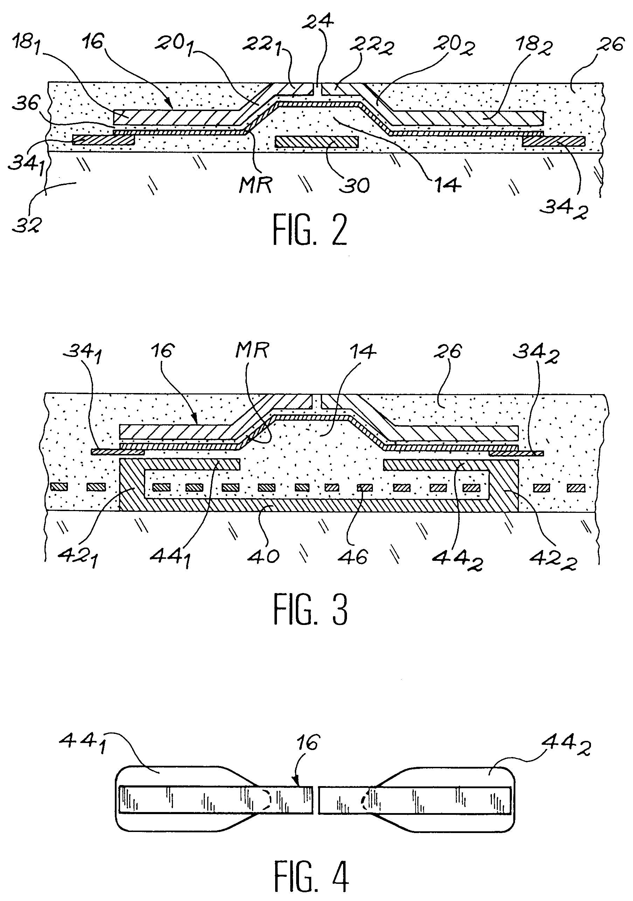

La figure 2 montre, en coupe, une tête magnétique de lecture conforme à l'invention. Sur cette figure, on retrouve des éléments déjà représentés sur la figure 1, à savoir le relief ou pion 14, la couche magnétique supérieure 16 composée des parties latérales 18₁, 18₂, des parties inclinées 20₁, 20₂ et des pièces polaires 22₁, 22₂ séparées par l'entrefer 24.

La couche 16 peut être en Fe-Ni. Son épaisseur peut être de quelques micromètres (par exemple 3 µm). Sa longueur est celle de la tête et de l'ordre de 200 µm.

La couche magnétique 16 est surmontée d'un isolant 26, qui peut être de la silice et qui définit le plan de vol de la tête.

La tête représentée sur la figure 2 montre encore une magnétorésistance MR disposée sous la couche 16 et séparée de celle-ci par une mince couche isolante 36, par exemple en SiO₂. La magnétorésistance présente donc deux extrémités horizontales, deux parties inclinées et une partie plane supérieure disposée juste sous l'entrefer 24. Les deux extrémités de la magnétorésistance reposent sur deux contacts électriques 34₁, 34₂. Il n'y a donc pas de circuit magnétique continu formé par la couche 16 et la magnétorésistance comme dans l'art antérieur cité mais seulement couplage magnétique.

La magnétorésistance MR étant très longue par rapport à sa largeur et à son épaisseur, les champs démagnétisants seront faibles.

La tête représentée comprend encore un conducteur électrique 30 parcouru par un courant perpendiculaire au plan de la figure. Le champ magnétique associé à ce courant est un champ longitudinal pour la magnétorésistance et permet d'assurer le fonctionnement de celle-ci en mode longitudinal.

L'ensemble est disposé sur un substrat 32, qui peut être en silice ou en silicium.

La tête qui vient d'être décrite sert uniquement à la lecture d'informations magnétiques. En d'autres termes, il s'agit d'un capteur. On peut compléter ce dispositif pour le rendre apte à l'écriture d'informations sur un support. On obtient alors une tête de lecture et d'écriture.

Une telle tête est représentée en coupe figure 3. On y retrouve la couche magnétique supérieure 16, la magnétorésistance sous-jacente MR, les contacts 34₁ et 34₂. On trouve en outre une couche magnétique inférieure 40 prolongée par deux piliers 42₁, 42₂, et deux concentrateurs de flux 44₁, 44₂ venant prendre appui sur les deux piliers. Un enroulement conducteur 46 permet le passage du courant d'écriture.

Les deux concentrateurs 44₁ et 44₂ ont une épaisseur de l'ordre de quelques micromètres et une longueur de 50 à 80 µm par exemple. Leur largeur s'amenuise vers le centre de la tête comme représenté sur la figure 4. La largeur tombe d'environ 60 µm à environ 10 µm. La largeur de la zone rétrécie est égale à celle de la couche magnétique supérieure 16.

Entre les concentrateurs 44₁, 44₂ et la couche magnétique supérieure 16 se trouvent deux intervalles isolants qui interrompent le circuit magnétique global de la tête, et c'est dans ces intervalles que se logent les extrémités de la magnétorésistance.

Dans une tête de lecture et d'écriture, il n'y pas nécessairement de conducteur de polarisation comme dans une tête de lecture seule (conducteur 30 de la figure 2). La raison est que l'enroulement 46 peut servir de moyen de polarisation longitudinale de la magnétorésistance grâce au passage d'un faible courant. C'est le cas dans le mode de réalisation de la figure 3.

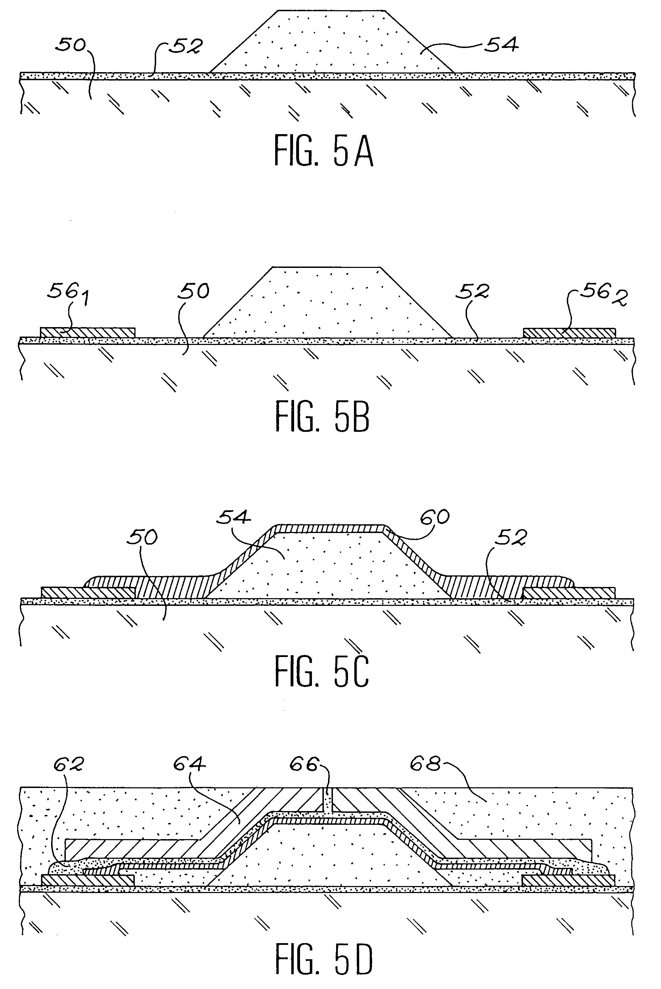

Les figures 5A à 5D montrent quatre étapes d'un procédé de réalisation d'une tête de lecture selon l'invention (ou de la partie supérieure d'une tête de lecture et d'écriture). On part d'un substrat 50 (ou d'un sous-ensemble comprenant déjà un circuit de fermeture du flux avec son enroulement). Sur ce substrat, on dépose une couche isolante 52 (Fig. 5A).

On dépose ensuite une couche isolante que l'on surmonte d'un masque de résine et, par une gravure, on enlève l'isolant autour du masque pour ne laisser subsister qu'un relief ou pion 54 isolant, sous le masque.

On dépose ensuite une couche métallique que l'on grave pour obtenir deux éléments d'extrémité 56₁, 56₂ qui formeront les futurs plots de contact (Fig. 5B).

On dépose ensuite une couche de matériau magnétorésistif 60 multicouche. Cette couche peut être par exemple en Ag/FeNi. On grave cette couche pour lui donner la longueur et la largeur voulues (Fig. 5C).

On recouvre l'ensemble d'une fine couche isolante 62, par exemple en SiO₂ (Fig. 5D). Puis on réalise, par tout procédé connu, une couche magnétique supérieure 64 avec son entrefer 66. On complète la tête par un isolant 68 définissant le plan de vol de la tête.

## Revendications

1. Tête magnétique comprenant une couche magnétique (16) recouvrant un relief isolant (14) présentant un sommet plat et deux flancs inclinés, cette couche magnétique (16) comprenant, sur le sommet du relief (14), deux pièces polaires (22₁, 22₂) séparées par un entrefer amagnétique (24), la tête comprenant encore un élément magnétorésistant (MR) allant d'une extrémité (18₁) de la couche magnétique à l'autre (18₂), cette tête étant caractérisée par le fait que l'élément magnétorésistant (MR) est une magnétorésistance multicouche travaillant en mode longitudinal, cette magnétorésistance (MR) s'étendant sous toute la longueur de la couche magnétique (16) en épousant la forme cette couche (18₁, 18₂, 20₁, 20₂, 22₁, 22₂), cette magnétorésistance (MR) étant séparée de la couche magnétique (16) par une mince couche isolante (36), la magnétorésistance (MR) étant ainsi intercalée entre la couche magnétique (16) et le relief isolant (14).

2. Tête magnétique selon la revendication 1, caractérisée par le fait qu'elle comprend deux contacts électriques (34₁, 34₂) aux deux extrémités de la magnétorésistance (MR).

3. Tête magnétique selon la revendication 1, caractérisée par le fait qu'elle comprend en outre un conducteur de polarisation placé transversalement (30).

4. Tête magnétique selon la revendication 1, caractérisée par le fait qu'elle comprend en outre un circuit magnétique de fermeture du flux magnétique (40, 42₁, 42₂, 44_{1,} 44₂) et un enroulement conducteur (46) magnétiquement couplé au circuit magnétique de fermeture du flux, la tête étant ainsi apte à fonctionner aussi bien en lecture qu'en écriture, la magnétorésistance (MR) n'étant pas en contact avec le circuit magnétique de fermeture du flux mais ayant ses extrémités disposées dans ledit circuit magnétique de fermeture du flux.

5. Tête magnétique selon la revendication 4, caractérisée par le fait que le circuit magnétique de fermeture du flux comprend deux concentrateurs magnétiques de flux (44₁, 44₂).
